# EUROPEAN PATENT SPECIFICATION

(11) **EP 1 922 358 B1**
(45) Date of publication and mention of the grant of the patent: **22.05.2013**
(21) Application number: 06760986.7
(22) Date of filing: 11.08.2006
(51) Int. Cl.: C08K 3/22, C08K 3/36, C08K 5/098, C08J 5/18, C08K 5/09

(54) **IMPROVEMENTS IN OR RELATING TO CONTAINERS AND PERMEABLE FILMS**
VERBESSERUNGEN BEI ODER BEZÜGLICH BEHÄLTERN UND PERMEABLEN FOLIEN
AMELIORATIONS SUR OU CONCERNANT DES EMBALLAGES ET DES FILMS PERMEABLES

(30) Priority: 11.08.2005 AU 2005904342
(43) Date of publication of application: 21.05.2008
(73) Proprietor: Trickey, Lynden William, Mont Albert, Victoria 3127 (AU); Peck, Jeffery Ernest, Langwarrin, Victoria 3910 (AU)
(72) Inventor: Trickey, Lynden William, Mont Albert, Victoria 3127 (AU); Peck, Jeffery Ernest, Langwarrin, Victoria 3910 (AU)
(74) Representative: Raynor, John
(86) International application number: PCT/AU2006/001145
(87) International publication number: WO 2007/016748

(56) References cited:
- EP-B1- 0 492 463
- WO-A1-00/29641
- WO-A1-91/03516
- WO-A1-2006/063957
- WO-A2-01/83318
- US-A- 3 617 312
- US-A- 5 221 571
- US-A1- 2005 222 316
- US-B1- 6 403 666
- DATABASE WPI Week 199107, Derwent Publications Ltd., London, GB; Class A14, AN 1991-047336, XP003008905 & JP 02 311 546 A (HANDA M) 27 December 1990
- PATENT ABSTRACTS OF JAPAN & JP 01 081 831 A (TOKUYAMA SODA CO LTD) 28 March 1989
- PATENT ABSTRACTS OF JAPAN & JP 02 194 035 A (MITSUI TOATSU CHEM INC) 31 July 1990

## Description

### Field of the invention

The present invention is directed to improvements in or relating to permeable packaging. More particularly, but not exclusively, the invention is directed to modifying the permeability of films and containers and other molded products for use in storing foodstuffs, and in particular respiring produce.

### Background of the invention

In this specification, where a document, act or item of knowledge is referred to or discussed, this reference or discussion is not an admission that the document, act or item of knowledge or any combination thereof was at the priority date:
(i) part of common general knowledge; or
(ii) known to be relevant to an attempt to solve any problem with which this specification is concerned.

The term 'foodstuff' as used in this specification is intended to include any natural or processed food item that respires or breathes. Fresh produce (fruits and vegetables) is one example of a food item that is known to respire and is accordingly encompassed by the description 'foodstuff' as used herein. Accordingly, some of the description of the invention which follows is directed to respiring produce, although it will be appreciated that the description is not intended to be so limited and encompasses other foodstuffs such as breads, and seafood, for example crustaceans.

The preservation of foodstuffs is an important issue for a number of reasons. Firstly, appropriate preservation techniques allow the producer of the foodstuff to be able to give assurances to customers that the product delivered will be in a form which is acceptable to them and to end users of the product. Secondly, appropriate preservation techniques can permit the shelf life or keeping of the product to be extended.

It is known that produce continues to draw oxygen from the atmosphere even following harvesting or picking, and converts it to gaseous carbon dioxide with some water vapour and other gases, which are then transmitted into the atmosphere.

It is also known that changes in the carbon dioxide and oxygen levels around the produce, as well as the level of other gases, can affect the storage life of the produce.

Temperature is another factor known to affect the rate of respiration of produce. For example, a temperature increase of 5 degrees Celsius is thought to contribute to a doubling of the respiration rate of some produce.

It is therefore important to slow the rate of respiration to reduce or delay the degree of spoilage of the produce.

A number of methods to control the respiration rate of produce are known in the prior art.

One method comprises so-called modified atmosphere packing (MAP), which involves adding a flushing or purging gas to a chamber in which the produce has been placed for storage or transport, so as to reduce the amount of oxygen in the chamber available to be consumed by the produce in the chamber. Often such chambers are fitted with temperature controls to manage the temperature of the atmosphere inside the chamber.

Another method comprises the use of controlled permeability films in which the produce is placed for storage or transport. These films are, to a degree, capable of dictating to respiring produce the rate of transmission of oxygen from the atmosphere to the produce. In addition, the amount of carbon dioxide generated by the produce and present in the atmosphere immediately surrounding the produce, can be controlled.

US Patent No 5,807,630 discloses one example of a controlled permeability film. The film comprises a film forming polymer, a dispersing polymer, and an inert porous filler. The filler may have a surface modifying agent coated thereon.

Australian Patent No 647410 discloses another example of a film to develop and maintain a controlled atmosphere. The film described comprises a polyethylene film incorporating porous activated earth particles.

### Summary of the invention

The present invention provides in a first aspect a permeable film, sheet or package for use in the storage of a foodstuff, the film comprising a plastics component, a porous component, and an acid component selected from at least one carboxylic acid compound in free or salt form that is capable of acting as a food preservative

The present invention provides in a second aspect a permeable container for use in extending the storage life of a foodstuff, the container having a semi-rigid or rigid structure formed from a composition of components comprising:
a) a plastics component;
b) a porous component; and
c) an acid component selected from at least one carboxylic acid compound in free or salt form.

Components according to the invention are selected so as to be suitable for use in forming products capable of safely containing, or being in safe contact with foodstuffs.

Films, sheets or packages according to the first aspect of the invention and containers according to the second aspect of the invention exhibit beneficial modification to their permeability, with a resultant reduction or delay in the onset of degradation of a foodstuff placed therein. Preferably, the film, sheet, package or container according to the first and second aspects of the invention can control the environment surrounding the foodstuff to manage the turgidity or senescence of the foodstuff.

The term 'storage' as used in this specification is intended to encompass any of the various stages through which foodstuffs pass, namely packing, transport, presentation for sale, and keeping by the consumer.

The film, sheet, package or container according to the first and second aspects of the invention may be substantially transparent to permit visual inspection of its contents.

The film, sheet or package according to the first aspect of the invention may be provided as a liner or a bag for a container into which a foodstuff is to be placed. It may be provided as a cover for a container into which a foodstuff has been placed. Film may be provided as both a liner and a cover for a single container.

The container according to the second aspect of the invention may take any suitable form. Typically the container will be a rigid or semi-rigid packaging form. In one embodiment the container may be a punnet for strawberries or other berries such as blueberries. In another embodiment the container may be a drawer of a refrigerated cabinet, such as a crisper. Other container configurations are envisaged.

A masterbatch or concentrate can be used in the manufacture of a film, sheet, package or container according to the first and second aspects of the invention. The masterbatch or concentrate can be mixed with a plastics component and molded to form a film or sheet having desired characteristics such as shape or thickness. The forming of a flexible film in comparison to a rigid or semi rigid container or package requires the combination of a particular composition of masterbatch be used in combination with a particular type of plastics component. For example, polystyrenes are particularly suited to forming semi-rigid or rigid containers. Different types of plastics processes can then be used to form either flexible films, sheets or mouldings. Containers according to the second aspect of the invention are typically thermoformed from sheets.

The plastics component according to the invention may take any suitable form. It will typically be a polymeric material. It may be a mixture of polymers. Typical plastics materials suitable for the invention include all forms of polyethylenes, and those materials commonly known as metallocenes, all forms of polypropylene, polystyrene, polyvinyl chloride (PVC), cellulose polymers, nylons, polyethylene terephthalate (PET), polyvinyl alcohol, biodegradable resins, polylactic acid (PLA), and ionomer resins, copolymers thereof, and mixtures of any one or more of the foregoing, with the proviso that the plastics material or resultant mixture is of food-grade standard. Further additives can be included for the processability of products in order to modify characteristics including strength, plasticity and melt strength.

Masterbatch compositions will typically include a plastics component in addition to the plastics component added before moulding to form the permeable film, sheet or moulding. Compositions of masterbatch are appropriate for certain types of plastics component to give the desired characteristics needed for either a flexible film or alternatively a semi-rigid or rigid container. Polystyrenes, for example high impact polystyrenes, are particularly preferred for use in forming semi rigid or rigid containers. LDPE, LLDPE, PVC, HDPE and polypropylene are particularly preferred for use in forming flexible films.

Containers made under this invention will typically have a thickness which will be appropriate for the strength and permeability requirements of the application. Generally, greater thickness of the film or container will result in decreasingly lower permeability levels.

The plastics component may be present in any suitable amount. Typically it will be present in an amount in the range of from about 50% to about 98% by weight in the finished product.

The porous component is thought to contribute to the generation of a microporous structure in the film, sheet, package or container, to thereby aid gas permeability of the film, sheet, package or container and to facilitate gas transfer to and from a foodstuff contained in either a bag formed from a film or sheet according to the first aspect of the invention or in a container according to the second aspect of the invention. Ideally, the microporous structure provides a means for controlling the concentration of gases, including oxygen and carbon dioxide, while managing the build up of relative humidity (RH) levels and turgidity surrounding the surface of respiring produce. Oxygen concentration levels below about 1% can cause anaerobic conditions leading to the damage of produce and facilitating growth of food borne pathogens. A film, sheet or package of the invention is capable of maintaining oxygen concentration levels above 1%.

The porous component will typically comprise a mineral additive, such as an activated clay. The porous component may also include a silica, alumina and/or aluminium oxide, or a composition of alumina or silica based materials. The porous component may be a zeolite. It may also comprise one or more activated clay minerals such as described in Australian Patent No 647410. For example, the activated clay mineral can be kaolin or calcined kaolin. The activated clay may also comprise Fuller's earth, activated bleaching earth, bleaching earth, or diatomaceous earth. Typically, the porous component is dried before combining with other components.

The particles of the porous material comprising the porous component may be of any suitable size. The porous component may be present in any suitable amount. Typically it will be present in an amount of 30% to about 50% by weight in the masterbatch, in the range of 2% to 15% by weight in the finished package, and preferably in the range of 3% to 9% in the finished package. A typical proportion of the porous component in the finished package is approximately 6% by weight.

The addition of the carboxylic acid component to a permeable film, sheet, package or moulding according to the invention can overcome early formation of common rots and moulds in a foodstuff item such as that which comprises fresh produce.

When produce is contained in a package according to the invention such as a bag, oxygen is transmitted to the produce through the bag wall, and in turn carbon dioxide is transferred out through the bag wall to the atmosphere. During this gas transfer phase or interaction with the bag wall, small amounts of the carboxylic acid component or salt thereof are available to be admitted to the inside of the bag to assist in preserving the contents therein. The carboxylic acid or salt component is capable of migration from the surface of the film, package or container according to the invention to the produce. The carboxylic acid or salt component, for example sorbic acid in free or salt form, is useful for providing food preservative properties. The carboxylic acid or salt component is capable of incorporation into and migration from the film, package or container to assist in extending the storage life of the foodstuff to be contained therein.

Similar considerations, and in particular issues of condensation build-up and the resultant onset of mould, apply to other foodstuffs normally packaged in plastic films such as breads and crumpets.

Any suitable carboxylic acid and/or salt thereof or mixture thereof may be used in the present invention with the proviso that the carboxylic acid, carboxylic acid salt, or resultant mixture should be FDA or EU food approved.

The carboxylic acid and/or salt will typically be an unsaturated carboxylic acid or salt and preferably a polyunsaturated carboxylic acid.

The carboxylic acid or salt component preferably comprises sorbic acid (E200) and/or a salt thereof. It may accordingly comprise a mixture of sorbic acid and one or more salts of sorbic acid. Sorbic acid (E200) is approved for food applications.

Salts of carboxylic acids will typically be metal salts thereof. Salts of alkali metals or alkaline earth metals are presently preferred. An example of a preferred alkali metal salt of sorbic acid (E200) is potassium sorbate (E202). An example of a preferred alkaline earth metal salt of sorbic acid is calcium sorbate (E203). These salts of sorbic acid are similarly approved for food applications.

The carboxylic acid component or salt thereof may be present in any suitable amount. Typically it will be present in an amount in the range of from about 0.01% to about 5% by weight of the film, sheet, package or container of the invention.

A film, sheet, package or container according to the first and second aspects of the invention may be further provided with a plurality of perforated holes to aid with gas permeability. The number and size of the holes can be determined for specific foodstuffs and storage temperatures.

A preferred composition for a permeable film, sheet, package, container or other moulded product according to the present invention comprises:
from about 90% to about 97% by weight of a plastics component;
from about 3.0% to about 8.0% by weight of a porous component; and
from about 0.05% to about 1.5% by weight of a carboxylic acid component or a salt thereof.

In a more preferred embodiment, the preferred composition includes from about 0.1% to about 1.5% by weight of anti-fogging agents.

Other components may include antioxidants, antimicrobial agents, fungicides and anti-static agents which may also be added to modify the film, sheet, package, container or other moulded product as required for its specific use. Examples include antimicrobial agents that include metal ions supported on zeolite, isothiocyanate in cyclodextrin with cobalt ion, chitosan, allyl isothiocyanate, silver-based fungicide, quaternary ammonium salt, organic monoglycerides, copper and zinc, benzoic acid, sodium benzoate and propionic acid. Typically, the film, sheet, package, container or moulded product of the invention will be monolayer. The film, package, container or moulded product can also be formed from more than one layer.

The present invention provides in another embodiment a permeable film, sheet, package or container for use in the storage of a foodstuff, its composition comprising a polymer component, an activated clay component, and sorbic acid or an alkali metal or an alkaline earth metal salt thereof. Preferably, the container of the invention is rigid or semi-rigid.

Preferably, the film, sheet, package or container according to the first and second aspects of the invention described above includes an antifog component.

The present invention provides in another embodiment a masterbatch or concentrate suitable for use in manufacturing a film, package, or container according to the invention as described above.

### Description of the preferred embodiment

The invention will now be further explained and illustrated by reference to the following examples and trials.

It should be noted that packaging produced according to the invention is referred to using the indicator 'Novopore AB521LD'.

### TRIAL 1: FILM PERMEABILITY TEST

The purpose of the oxygen transmission rate (OTR)/carbon dioxide transmission rates (COTRS) test was to establish the film permeability of the invention when extruded at a measured thickness of approx. 31 micron. It is generally accepted that films converted into produce carton liner bags with OTRs above 20,000 and COTRS above 45,000 provide extended storage life under suitable storage conditions.

Film samples were manufactured using:

| | |
|---|---|
| Materbatch NOVOPORE AB521LD | 10% in accordance with the invention. |

| Polyethylenes: | |
|---|---|
| Dow Affinity PF 1140 | 40% |
| Dow 2045G or EHS 7028 | 48% |
| Process Aid | 2% |

Samples of the film bags were cut and prepared into flat sheet samples ready for testing.

The composition of the film tested was:

| | |
|---|---|
| ULDPE (CAS 026221-78-3) | 38.4% |
| LLDPE (CAS 026221-78-3) | 54.6% |
| ACTIVATED CLAY (CAS 1327-36) | 3.4% |
| POTASSIUM SORBATE (CAS 24634-61-5) | 0.3% |
| ANTIFOG (CAS 1338-39-2/31566-31-1) | 1.0% |
| PROCESS AIDS | 2.3% |

The film was tested by using the mixed gas cell technique at 22°C and 95% RH. The measurement technique involves placing a film sample over the open face of a 500 ml cylindrical glass chamber. The apex of the chamber has a conical B24 ground glass opening to allow flushing of the atmosphere inside the cell and to allow gas sampling through the septum fitting. One side of the chamber is flushed with a gas mixture. The depletion of CO₂ and accumulation of O₂ are measured by using a Mocon Gas Analyzer.(Model 650).

**Table 1: Results of Film Permeability Test**

| FILM DESIGNATION | MEASURED FILM THICKNESS( um) | O₂ (cm³/m².day) | CO₂ (cm³/m².day) | RATIO |
|---|---|---|---|---|
| 10%Novopore | 31.0 +/- 1.8 | 46,073 +/- 5007 | 78,503 +/- 8835 | 1.7 +/- 0.1 |
| AB521LD in 90%PE | | | | |

The results listed above in Table 1 are the average gas transmission rates from four replicates tested at 22°C and at 95% RH. The test results demonstrate the higher gas transmission rates for the film according to the invention.

### TRIAL 2: CANTALOUPE MELON TRIAL

The trial used cantaloupe fruit purchased from a local Supermarket and was conducted at fluctuating temperatures ranging from 20°C to 10°C. It should be noted that cantaloupe are generally packed loose into a carton and transported to a point of destination. The average retail shelf life is around 7 days depending on temperature and produce maturity. The purpose of the trial was to determine if the invention would extend shelf life and minimize produce weight loss for 14 days when produce was exposed to temperature variations. According to industry sources loose cantaloupe normally have an expected shelf life of around 7 days at 10°C to 20°C.

The film used was based on the composition described and previously derived from Novopore AB 521LD.

Two replicates containing three cantaloupe each were packed into bags manufactured from film made under the invention and placed side by side for observation and evaluation. At time of packing both sample replicates had some surface imperfections but no other signs of deterioration.

Trial results after 14 days:
CONDENSATION: None for both replicates.
DETERIORATION: Whilst the surface imperfections would normally have shown further deterioration after 7 days, both replicates were visually as good as when packed.

**Table 2: Weight loss results**

| | Day 1 | Day 2 | Day 4 | Day 7 | Day 9 | Day 12 | Day 14 |
|---|---|---|---|---|---|---|---|
| Replicate a | 1506 g | 1505 g | 1505 g | 1504 g | 1504 g | 1503 g | 1502 g |
| Replicate b | 1421 g | 1421 g | 1420 g | 1420 g | 1419 g | 1419 g | 1416 g |

Table 2 shows that both replicate samples performed with good control of moisture, and weight loss. Melon colour did not change over the 14 days, indicating the film can slow or hold the ripening process even under less than ideal storage conditions. Produce "cantaloupe netting" did not change and showed no sign of moisture entrapment.

Of significance, the trial demonstrated that rots or mould normally associated with melon under the trial storage conditions did not form.

All trials using MBSAPS 1 are referred to as MBSAPS 1 punnets and Bantecpacks

### TRIAL 3: STRAWBERRY

The purpose of this trial was to assess the performance of punnets made under this invention.

Industry information indicated that fresh strawberries would normally have a viable shelf life of 3 to 7 days depending on fruit maturity and level of exposure to fluctuating temperatures. Information supplied by fruit retailers stated that weight loss and fruit spoilage were major issues with wastage being around 30% during the summer period.

A trial was conducted with specific emphasis on: weight loss control, sensory observations, and deteriorative factors such as over-ripening and mould formation. Two pack sizes were used for the trial. Each pack had a clear rigid PVC lid fitted to a black base manufactured using the MBSAPS1 Masterbatch under this invention.

The composition of the sheet for these punnets was:

| | |
|---|---|
| Ethylene Co-Polymer | 2.7% |
| Styrene Co- Polymers (CAS(9003-53-7) | 91.0% |
| Activated Clay (CAS 1327-36-2) | 4.7% |
| Antifog (CAS 1338-39-2/31566-31-1) | 0.65% |
| Potassium Sorbate (CAS 24634-61-5) | 0.45% |
| Calcium Stearate (CAS 1592-23-0 | 0.1% |
| Process Aid | 0.4% |

PACK TYPE 1: Tray dimensions: the sample 280 represents the length of the pack at a packed weight of 347 g of berries. The measurements are: 280 mm length x 100 mm wide x 40 mm depth.

PACK TYPE 2: 340 Length x 100 mm width x 40 mm depth at a packed weight of strawberries of 464 g.

Fruit was inspected every two days and after day 14 fruit was still in marketable condition.

There were no sign of rots or mould or other deteriorative factors above for the period. The trial demonstrated the effectiveness of the interaction between the O₂, CO₂ and the preservative additive. There was no "fizz" or alcoholic tainting when consumed after 14 days.

The fruit was free from mould spore and brown rot. Of particular importance was the non-existence of condensation. There was no moisture pooling in the base of the container. Weight loss recorded for pack type 2 was 8 grams (1.7%) and for pack type 1 only 6 grams (1.4%) after 14 days. These results demonstrate the effectiveness of the packaging made under this invention for strawberries.

### TRIAL 4: RASPBERRIES

Trial 4 involved a 13 day period. Six replicate 150 g punnets of raspberries were obtained on the same day from the same local supermarket in the same outer tray pack. The age of the berries was not known and as such the shelf life was expected to be short. According to industry information raspberries only have a shelf life of 3 to 6 days under the variable retail environments.

The purpose of the trial was to ascertain if a punnet produced in accordance with the invention was of benefit in extending the shelf life, freshness, reduce weight loss and improve the overall condition of raspberries compared with a conventional PVC punnet of the same capacity.

Trial preparations involved packing fruit into three MBSAPS1 based raspberry punnets, having the punnets weighed and placed into a cool room together with raspberries packed in three conventional PVC containers.

For the purpose of the trial the temperature was set between 1 and 3°C to simulate recommended storage protocols for this fruit.

The assessment criteria involved a rating system from 0 to 10, 10 being optimum with 5 being the minimum for acceptable resale condition. Critical aspects of assessment included, weight loss, colour, limpness (reduced turgidity) and general deterioration of the raspberries. The punnets were inspected daily.

**Table 3: Results of Trial 4**

| | PVC standard punnets | MBSAPS1 punnets |
|---|---|---|
| Weight loss (total) | 6.4 % | Nil |
| Colour (day 10) | 5 | 10 |
| Limpness (day 5) | 8 | 10 |
| Deterioration (day 8) | 3 | 9 |

In summary, the MBSAPS1 based punnets were superior in all aspects of the trial. Fruit was still in a saleable condition after 13 days.

### TRIAL 5: Table Grapes

Independent testing was conducted to compare the performance of a punnet produced in accordance with the invention with the existing industry-standard, perforated polyethylene consumer bag by testing under simulated retail display conditions. At the time of this trial there were no other rigid punnets used by Australian retailers for the sale of table grapes.

The materials and methods were as follows:
*MBSAPS1 based punnet*
   ● Plastic breathable tray base with heat-sealed top film
   ● As supplied - plastic perforated "carry" bunch grape bag (open)
*Storage conditions*
   ● 5.5°C in order to approximate retail refrigerated display - temperature monitoring during the trials indicated that variation around this temperature was negligible
   ● Humidity in the cold-room ranged between approximately 85 and 95% RH
   ● On the day following arrival berry core temperatures were 6°C
*Experimental design & data analysis*
   ● Initial quality evaluations were made of the grapes on arrival
   ● Six industry standard bags and six MBSAPS1 based packs were prepared from the same delivery (MBSAPS 1 are referred to in this report as Bantec packs)
   ● Packages were arranged in a cold-room in a randomised complete block design and the data was analysed by analysis of variance (i.e. ANOVA)
*Quality assessments*
   ● Berry colour was measured using a Minolta CR200 Chromameter calibrated to a white tile {Y = 94.6, x = 0.3128, y = 0.3199 (tile no. 13331534)}. The b* values and a* values were used to calculate hue angle values. Hue angle (h°) = tan⁻¹ (b*/a*) where 90° = yellow and 180° = green. One chromameter reading was made on each of eight randomly selected berries per pack. The waxy bloom was first removed with tissue paper.
   ● Pack total weight to measure weight loss
   ● Atmosphere measurement (oxygen, carbon dioxide) using a Novatech gas analyser
   ● Representative photographs
   ● Overall visual quality (or market appearance) per pack (subjective rating scale, see Table 4)
   ● Incidence/severity of visible rots (subjective rating scale, see Table 4) per pack
   ● Off-odours (subjective rating scale, see Table 4) of cut fruit
   ● Condensation in pack (subjective rating scale, see Table 4)

**Table 4: Subjective rating scales for visual quality, rots, off-odour and pack condensation**

| **RATING** | **1** | **2** | **3** | **4** | **5** |
|---|---|---|---|---|---|
| Overall visual quality | very poor | poor | fair | good | excellent |
| (ie. market appearance) | *-waste, not useable, no market value* | *-serious deterioration, unsaleable & limit of useability* /*edibility. Grapes-extensive stem browning, shatter, berry shrivel & yellowing, berry softening* | *-deterioration evident, saleable but limit of saleability. Grapes-some stem shrivel evident, up to 3 detertorating berries per pack* | *-minor symptoms of deterioratio n, not objectionable. Grapes - some evidence of stem shrivel* | *-no quality defects or symptoms of deterioration. Grapes-berries turgid firm, well-coloured & firmly attached to a healthy, green stem* |
| *-The overall perception of produce with respect to saleability & consumer appeal* | | | | | |
| Visible rots | severe | moderate | slight | trace | none |
| | *more than 6 effected berries* | *4 to 6 effected berries* | *2 or 3 effected berries* | *negligible growth on 1 berry or stem-end* | |
| Unsavoury or off-odours | extreme | severe | moderate | slight | none |
| | *-vile, intolerable* | *definitely objectionable* | *-becoming objectionable* | *-not objectionable* | |
| *-Objectionable odous can occur with advancing senescence & biochemical changes* | | | | | |
| Condensation | *extreme -water pooling in pack* | severe | moderate | slight | none |

By the 24th day of the trial all of the MBSAPS1 based packs remained saleable, however, four out of the six industry packs were assessed as unsaleable. The trial was continued for another five days to check the endurance of the MBSAPS 1 based packs. The industry-standard packs showed greater stem and berry shrivelling. Berries at the bottom of the industry-standard bags showed greater berry browning, crush damage and mould development. Stem shrivel was generally more advanced in industry-standard packs, and less developed in MBSAPS1 packs. Dry, brown, shrivelled stems indicate undesirable aging or senescence, whereas green stems are a sign of good quality.

Continuous quality assessments showed that overall visual quality was better maintained in the MBSAPS 1 based packs with the development of less stem and berry shrivelling, no mould and reduced berry yellowing. When packs were delivered to the testing authority some condensation was present in one of the MBSAPS 1 based packs on about 20% of the lid area but it had dissipated by day seven in storage. However, condensation on the inside of the Bantec pack film lid did not develop during storage and at the four-week assessment, free water was not evident in the base of either package type. At the end of the trial period there were significant differences between the package types with respect to incidence of rots.

In respect to water loss, grapes are very susceptible to water loss and every effort must be made to minimise such loss. Symptoms can appear quickly with shrivelling and darkening of the stems. Shrivelling of the stem leads to weakening or even detachment of the berries from their pedicels (shatter) and this can promote disease development. Over 29 days, the weight loss from each MBSAPS1 package averaged less than 2g. In comparison, industry-standard bags each averaged a loss of 81g over the same period.

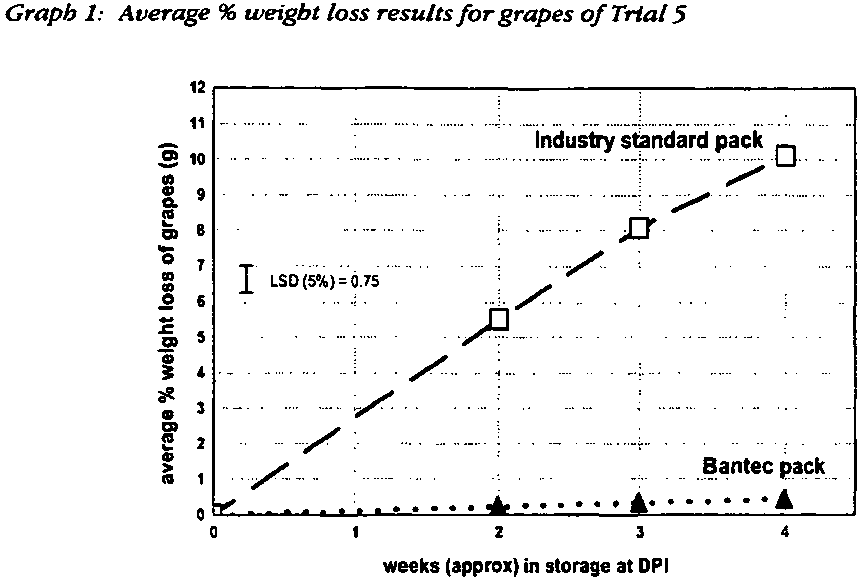

After approximately four weeks in storage, the percentage weight loss of grapes stored in MBSAPS1 based packs averaged less than 0.5%. In contrast, grapes stored in the industry-standard bag averaged a 10.1% weight loss by the end of the trial. Weight loss from the industry-standard bags was also significantly higher after approximately two and three weeks.

In summary, Thompson Seedless grapes packed into both MBSAPS1 based packs and industry-standard bags were stored at 5.5°C for approximately four weeks to determine their relative performance under simulated retail display. Overall visual quality was better maintained in the MBSAPS 1 package with the development of less stem and berry shriveling, and reduced berry yellowing. Grapes in MBSAPS 1 packs also lost significantly less weight than those in industry-standard bags. Condensation on the inside of the MBSAPS1 film lid did not develop during storage and at the four-week assessment, free water was not evident in the base of either package type. At the end of the trial period there were significant differences between the package types with respect to incidence of visible rots. No rot was detected in the MBSAPS1 packs compared to significant rot noted in the industry standard packs. Oxygen and carbon dioxide concentrations within the MBSAPS1 packs remained close to atmospheric levels.

### TRIAL 6: ASPARAGUS

Testing was conducted to compare the performance of a punnet produced in accordance with the invention with the existing industry-standard, loose asparagus spears packed together in bunches and held together with an elastic band were tested under simulated retail display conditions. At the time of this trial there were no other rigid punnets used by Australian retailers for the sale of asparagus.

MBSAPS1 based punnets were used as follows:
● Plastic breathable tray base with a PVC rigid lid
● As supplied - lose bunched asparagus held together with an elastic band

The purpose of the trial was to determine if extended storage could be achieved for Asparagus when using the Bantec (MBSAPS1 based) punnet material. The Bantec pack consisted of a clear rigid PVC lid and base manufactured in accordance with the invention.

PACK TYPE 1: Tray dimensions - the sample 280 represents the length of the pack at a packed weight of 212 g of asparagus. The measurements were: 280 mm length, x 100 mm wide x 40 mm depth.

Asparagus is very susceptible to water loss and every effort must be made to minimise such loss. The trial results showed that over 17 days, weight loss from each Bantec (MBSAPS1 based) asparagus package averaged 3.1g. In comparison, industry-standard bunches each averaged a loss of 35.2g over the same period (Graph 2).

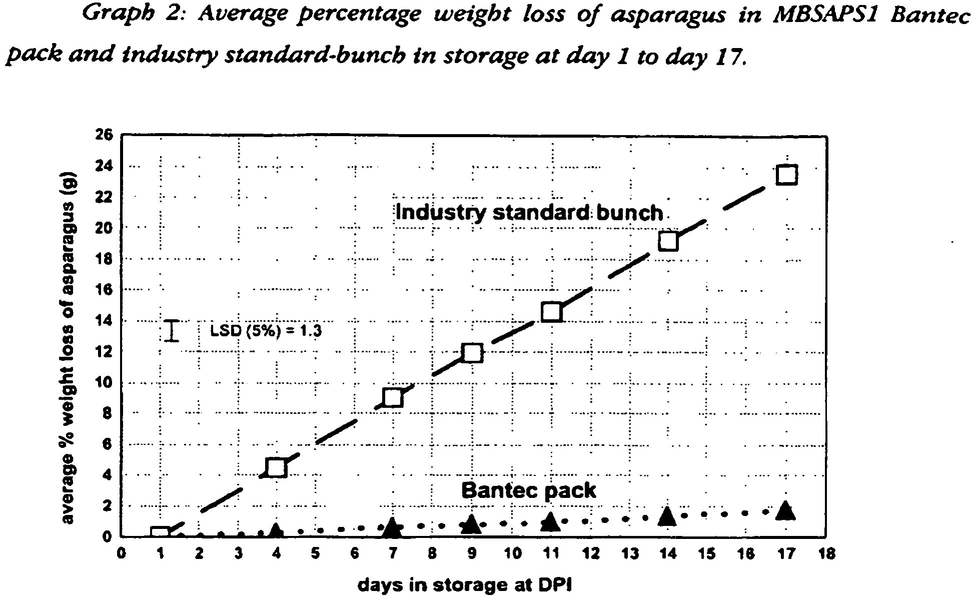

In summary, after 17 days in storage, the overall visual quality of asparagus was significantly better maintained in Bantec packs (Table 5), wherein there was less stem shrivelling due to water loss. Shrivelling (due to water loss) severely lowered quality of the unpackaged industry standard. Shrivelling was most evident in the area up to approximately 7 cm from the cut end. Stems stored in Bantec packages were unshrivelled. Spears stored in Bantec packs still retained good-to-excellent quality on the 15-7-05. The quality observed within the pack shows lower condensation. The tips 21-5-05 of the industry-standard material often remained in good condition but two or three (worst example shown) developed tip blackening.

**Table 5: Visual quality assessment (5 = excellent → 1= very poor) of Bantec packages and industry-standard bunches of asparagus stored (5.5°C)**

| | | | | | |
|---|---|---|---|---|---|
| Date | 5-7-05 | 13-7-05 | 15-7-05 | 18-7-05 | 21-7-05 |
| Bantec | 4.8 | 4.4 | 4.4 | 3.6 | 2.4 |
| Industry Standard | 4.8 | 2.8 | 2.4 | 2.0 | 1.2 |

At the conclusion of the trial day 17, MBSAPS1 package atmospheres were tested. In all of the MBSAPS1 packs the oxygen and carbon dioxide concentrations remained at standard atmospheric levels.

In further summary, after 17 days in storage at the independent research centre the percentage weight loss of asparagus in Bantec (MBSAPS1 based) packs averaged 1.7%. In contrast, asparagus stored as industry-standard bunches averaged a 23.6% weight loss by the end of the trial (Graph 2). Weight loss from the industry-standard bunches was significantly higher than MBSAPS1 stored material at every assessment date after arrival on day 1 (i.e. days 4, 7, 9, 11, 14 and 17). After day 1, only the MBSAPS1 percentage weight loss readings on days 4 and 17 were significantly different. The significance of the data demonstrates that weight loss correlates to shriveling, making the product less saleable. Another important factor was that the control developed "tip" blackening that did not occur in the Bantec packs.

After 17 days in storage, the overall visual quality of asparagus was significantly better maintained in MBSAPS1 packs (Table 5), wherein there was less stem shrivelling due to water loss. Asparagus stored in MBSAPS1 packs retained more green colour and developed less yellowing than unpacked industry bunches. There were no deteriorative rots or mould evident during the trial.

It will also be understood that in order to facilitate extending the storage life of a foodstuff by use of a package according to the invention as described herein, it still remains important to maintain control of the temperature of the foodstuff. Most produce should be stored in an environment having a temperature below 4°C. It will also be understood that optimal industry recommended storage temperatures vary between different types of produce.

Masterbatches such as MBSAPS1 manufactured according to this invention facilitate easy incorporation of the active ingredients under this invention, into appropriate plastics materials by the simple addition of such masterbatches to the hopper of relevant plastics processing machinery. Thus the processor does not require the specialised machinery to incorporate the active, generally non-polymeric ingredients of the invention. However, the packaging products under this invention can be directly produced through the addition of the active ingredients to the appropriate plastics through the use of appropriate specialised processing equipment.

MBSAPS1 masterbatch is typically formed into a pelletised resin concentrate. This Masterbatch has been designed to be added at a rate of 10% to the other polymeric ingredients and has the following preferred general composition:
a) 35-40% polystyrenes (CAS 9003-53-8 & 9003-55-8);
b) 45-50% activated clay particles (CAS 1327-36-2);
c) 8-12% anti fog component (CAS 1338-39-2 & 31566-31-1);
d) 2-8% preservative (CAS 24634-61-5 & 110-44-1).

A typical process of incorporating MBSAPS1 for manufacturing a permeable container may involve:
i) adding 90% high impact polystyrenes (HIPS) to 10% MBSA-PS1 (<0.1% moisture level);
ii) mixing thoroughly;
iii) drying for between 30 minutes to around 2 hours at 85-100°C; and
iv) extruding a sheet and thermoforming or injection moulding a plastic permeable film, package or container.

It is to be understood that where appropriate for the major plastics component, other masterbatches are employed for reasons of compatibility. The major difference to that of the MBSAPS1 Masterbatch would, in general be in the selection of the appropriate plastics component for the relevant masterbatch.

The word 'comprising' and forms of the word 'comprising' as used in this description do not limit the invention claimed to exclude any variants or additions.

Modifications and improvements to the invention will be readily apparent to those skilled in the art. Such modifications and improvements are intended to be within the scope of this invention.

## Claims

1. A permeable film, sheet or package for use in the storage of a foodstuff, the film, sheet or package formed from a composition comprising a plastics component, a porous component, and an acid component selected from at least one carboxylic acid compound in free or salt form that, following formation of the film, sheet or package, is capable of acting as a food preservative to a foodstuff that is, in use, contained within the film, sheet or package.

2. The film, sheet or package according to claim 1, wherein the composition of components further comprises an antifog component.

3. The film, sheet or package according to claim 1 or claim 2, wherein the composition of components is selected to, in use, form a film, sheet or package to contain a foodstuff and manage the environment surrounding the foodstuff to control its turgidity and/or senescence.

4. The film, sheet or package according to any one of claims 1 to 3, wherein the plastics component is present in the range of from about 75% to 98% by weight in the film, sheet or package.

5. The film, sheet or package according to any one of claims 1 to 4, wherein the plastics component comprises one or more polymers selected from the group consisting of polyethylenes, metallocenes, polypropylene, polystyrene, polyvinyl chloride, cellulose polymers, nylons, polyethylene terephthalates, biodegradable polymers, ionomer resins, copolymers thereof, and mixtures thereof.

6. The film, sheet or package according to any one of claims 1 to 5, wherein the porous component is capable of generating a microporous structure in the film, sheet or package to facilitate gas permeability for controlling gas transfer to and from a foodstuff covered with said film, sheet or package.

7. The film, sheet or package according to claim 6, wherein the porous component includes a mineral additive.

8. The film, sheet or package according to claim 7, wherein the mineral additive includes an activated clay or at least one activated mineral.

9. The film, sheet or package according to any one of claims 1 to 8, wherein the particle size of the porous component is in the range of from about 2 to 150 microns.

10. The film, sheet or package according to any one of claims 1 to 9, wherein the porous component is present in the range of from about 2% to 15% by weight in the film, sheet or package.

11. The film, sheet or package according to claim 10, wherein the porous component is present in the range of from about 3% to 9% by weight in the film, sheet or package, preferably about 6.0%.

12. The films, sheet or package according to any one of claims 1 to 11, wherein the acid component is a preservative component for facilitating control of the environment surrounding the foodstuff to reduce its senescence or aid in substantially maintaining its turgidity.

13. The film, sheet or package according to any one of claims 1 to 12, wherein the acid component is a mono or polyunsaturated carboxylic acid.

14. The films, sheet or package according to any one of claims 1 to 13, wherein the carboxylic acid component is a salt of alkali metals or alkaline earth metals.

15. The film, sheet or package according to any one of claims 1 to 14, wherein the carboxylic acid component is sorbic acid in free or salt form.

16. The film, sheet or package according to claim 15, wherein the form of sorbic acid is potassium sorbate or calcium sorbate.

17. The film, sheet or package according to any one of claims 1 to 16, wherein the acid component is present in the range from about 0.01 to 5.0% by weight in the film, sheet or package.

18. The film, sheet or package according to any one of claims 1 to 17, further comprising a plurality of perforations to facilitate gas permeability.

19. The film, sheet or package according to claim 18, whereby the number and size of perforations are adapted for application with the type of foodstuff at a specific range of storage temperatures.

20. The film, sheet or package according to any one of claims 1 to 19, wherein the film is substantially transparent.

21. The film, sheet or package according to any one of claims 1 to 20, wherein the composition of components is selected to form a flexible film adapted to have a pliability suitable for use in covering a foodstuff.

22. The film, sheet or package according to any one of claims 1 to 21, wherein the composition of the film, sheet or package comprises:
a) from about 91.0% to about 96.5% by weight of the plastics component;
b) from about 3.5% to about 5.5% by weight of the porous component;
and
c) from about 0.05% to about 2.0% by weight of the acid component.

23. The films, sheet or package according to claim 22, wherein the composition of the film, sheet or package further comprises from about 0.1% to 1.5% by weight of an anti-fog component.

24. The film, sheet or package according to any one of claims 1 to 23, wherein the composition of components is selected to enable formation of a flexible package or container for use in storing a foodstuff.

25. The film, sheet or package according to any one of claims 1 to 23, wherein the composition of components is selected to enable formation of a semi rigid or rigid package or container.

## Patentansprüche

1. Durchlässige Folie, Platte oder Verpackung zur Verwendung zum Aufbewahren eines Nahungsmittels, wobei die Folie, Platte oder Verpackung aus einer Zusammensetzung gebildet ist, die eine Kunststoffkomponente, eine poröse Komponente und eine Säurekomponente umfasst ausgewählt unter mindestens einer Carbonsäureverbindung in freier oder Salzform, die auf die Bildung der Folie, Platte oder Verpackung hin in der Lage ist, als Nahrungsmittelkonserviermittel für ein Nahrungsmittel zu wirken, das bei der Verwendung innerhalb der Folie, Platte oder Verpackung enthalten ist.

2. Folie, Platte oder Verpackung nach Anspruch 1, wobei die Zusammensetzung der Komponenten des Weiteren eine beschlagverhindernde Komponente umfasst.

3. Folie, Platte oder Verpackung nach Anspruch 1 oder Anspruch 2, wobei die Zusammensetzung der Komponenten ausgewählt wird, um bei der Verwendung eine Folie, Platte oder Verpackung zu bilden, die ein Nahrungsmittel enthalten und die Umgebung, die das Nahrungsmittel umgibt so regulieren soll, dass sein Turgor und/oder seine Seneszenz reguliert wird.

4. Folie, Platte oder Verpackung nach einem der Ansprüche 1 bis 3, wobei die Kunststoffkomponente in einer Menge im Bereich von etwa 75 bis 98 Gew.-% in der Folie, Platte oder Verpackung vorliegt.

5. Folie, Platte oder Verpackung nach einem der Ansprüche 1 bis 4, wobei die Kunststoffkomponente ein oder mehrere Polymere umfasst ausgewählt aus der Gruppe bestehend aus Polyethylenen, Metallocenen, Polypropylen, Polystyrol, Polyvinylchlorid, Cellulosepolymeren, Nylons, Polyethylenterephthalaten, biologisch abbaubaren Polymeren, Ionomerharzen, Copolymeren davon und Mischungen davon.

6. Folie, Platte oder Verpackung nach einem der Ansprüche 1 bis 5, wobei die poröse Komponente in der Lage ist, eine mikroporöse Struktur in der Folie, Platte oder Verpackung zu erzeugen, um die Gasdurchlässigkeit zum Regulieren der Gasübertragung zu und von einem mit der Folie, Platte oder Verpackung bedeckten Nahrungsmittel zu erleichtern.

7. Folie, Platte oder Verpackung nach Anspruch 6, wobei die poröse Komponente ein Mineralzusatzmittel umfasst.

8. Folie, Platte oder Verpackung nach Anspruch 7, wobei das Mineralzusatzmittel einen aktivierten Ton oder mindestens ein aktiviertes Mineral umfasst.

9. Folie, Platte oder Verpackung nach einem der Ansprüche 1 bis 8, wobei die Teilchengröße der porösen Komponente im Bereich von etwa 2 bis 150 Mikron liegt.

10. Folie, Platte oder Verpackung nach einem der Ansprüche 1 bis 9, wobei die poröse Komponente in einer Menge im Bereich von etwa 2 bis 15 Gew.-% in der Folie, Platte oder Verpackung vorliegt.

11. Folie, Platte oder Verpackung nach Anspruch 10, wobei die poröse Komponente in einer Menge im Bereich von etwa 3 bis 9 Gew.-%, bevorzugt von etwa 6,0 %, in der Folie, Platte oder Verpackung vorliegt.

12. Folie, Platte oder Verpackung nach einem der Ansprüche 1 bis 11, wobei die Säurekomponente eine Konserviermittelkomponente zum Erleichtern der Regulierung der Umgebung ist, die das Nahrungsmittel umgibt, um seine Seneszenz zu reduzieren oder dazu beizutragen, seinen Turgor im Wesentlichen aufrechtzuerhalten.

13. Folie, Platte oder Verpackung nach einem der Ansprüche 1 bis 12, wobei die Säurekomponente eine einfach oder mehrfach ungesättigte Carbonsäure ist.

14. Folie, Platte oder Verpackung nach einem der Ansprüche 1 bis 13, wobei die Carbonsäurekomponente ein Salz von Alkalimetallen oder Erdalkalimetallen ist.

15. Folie, Platte oder Verpackung nach einem der Ansprüche 1 bis 14, wobei die Carbonsäurekomponente Sorbinsäure in freier oder Salzform ist.

16. Folie, Platte oder Verpackung nach Anspruch 15, wobei die Form von Sorbinsäure Kaliumsorbat oder Calciumsorbat ist.

17. Folie, Platte oder Verpackung nach einem der Ansprüche 1 bis 16, wobei die Säurekomponente in einer Menge im Bereich von etwa 0,01 bis 5,0 Gew.-% in der Folie, Platte oder Verpackung vorliegt.

18. Folie, Platte oder Verpackung nach einem der Ansprüche 1 bis 17, des Weiteren mehrere Perforierungen zum Erleichtern der Gasdurchlässigkeit umfassend.

19. Folie, Platte oder Verpackung nach Anspruch 18, wobei die Anzahl und Größe von Perforierungen für die Anwendung bei dem Nahrungsmitteltyp in einem spezifischen Bereich von Aufbewahrungstemperaturen geeignet sind.

20. Folie, Platte oder Verpackung nach einem der Ansprüche 1 bis 19, wobei die Folie im Wesentlichen durchsichtig ist.

21. Folie, Platte oder Verpackung nach einem der Ansprüche 1 bis 20, wobei die Zusammensetzung der Komponenten so ausgewählt wird, dass sie eine flexible Folie bilden, die geeignet ist, eine Biegsamkeit aufzuweisen, die für die Verwendung zum Bedecken eines Nahrungsmittels geeignet ist.

22. Folie, Platte oder Verpackung nach einem der Ansprüche 1 bis 21, wobei die Zusammensetzung der Folie, Platte oder Verpackung Folgendes umfasst:
a) etwa 91,0 bis etwa 96,5 Gew.-% der Kunststoffkomponente;
b) etwa 3,5 bis etwa 5,5 Gew.-% der porösen Komponente; und
c) etwa 0,05 bis etwa 2,0 Gew.-% der Säurekomponente.

23. Folie, Platte oder Verpackung nach Anspruch 22, wobei die Zusammensetzung der Folie, Platte oder Verpackung des Weiteren etwa 0,1 bis 1,5 Gew.-% einer beschlagverhindenden Komponente umfasst.

24. Folie, Platte oder Verpackung nach einem der Ansprüche 1 bis 23, wobei die Zusammensetzung der Komponenten so ausgewählt wird, dass sie die Bildung einer biegsamen Verpackung oder eines biegsamen Behälters zur Verwendung zum Aufbewahren eines Nahrungsmittels ermöglicht.

25. Folie, Platte oder Verpackung nach einem der Ansprüche 1 bis 23, wobei die Zusammensetzung der Komponenten so ausgewählt wird, dass sie die Bildung einer semirigiden oder rigiden Verpackung oder eines semirigiden oder rigiden Behälters ermöglicht.

## Revendications

1. Film, feuille ou emballage perméable pour une utilisation destinée au stockage d'un produit alimentaire, le film, la feuille ou l'emballage formé(e) à partir d'une composition comprenant un composant plastique, un composant poreux et un composant acide sélectionné parmi au moins un composé acide carboxylique sous une forme libre ou de sel qui, après la formation du film, de la feuille ou de l'emballage, est capable d'agir comme conservateur alimentaire pour un produit alimentaire qui est, lors de son utilisation, contenu dans le film, la feuille ou l'emballage.

2. Film, feuille ou emballage selon la revendication 1, dans lequel/laquelle la composition des composants comprend en outre un composant antibuée.

3. Film, feuille ou emballage selon la revendication 1 ou la revendication 2, dans lequel/laquelle la composition des composants est sélectionnée pour, lors de son utilisation, former un film, une feuille ou un emballage pour contenir un produit alimentaire et prendre en charge l'environnement entourant le produit alimentaire pour contrôler sa turgescence et/ou sa sénescence.

4. Film, feuille ou emballage selon l'une quelconque des revendications 1 à 3, dans lequel/laquelle le composant plastique est présent dans la plage allant d'environ 75 % à 98 % en poids dans le film, la feuille ou l'emballage.

5. Film, feuille ou emballage selon l'une quelconque des revendications 1 à 4, dans lequel/laquelle le composant plastique comprend un ou plusieurs polymères sélectionnés dans le groupe constitué par les polyéthylènes, les métallocènes, le polypropylène, le polystyrène, le polychlorure de vinyle, les polymères cellulosiques, les nylons, les téréphtalates de polyéthylène, les polymères biodégradables, les résines ionomères, les copolymères de celles-ci, et des mélanges de ceux-ci.

6. Film, feuille ou emballage selon l'une quelconque des revendications 1 à 5, dans lequel/laquelle le composant poreux est capable de générer une structure microporeuse dans le film, la feuille ou l'emballage pour faciliter la perméabilité aux gaz afin de réguler le transfert de gaz vers et provenant d'un produit alimentaire recouvert avec ledit film, ladite feuille ou ledit emballage.

7. Film, feuille ou emballage selon la revendication 6, dans lequel/laquelle le composant poreux comprend un additif minéral.

8. Film, feuille ou emballage selon la revendication 7, dans lequel/laquelle l'additif minéral comprend une argile activée ou au moins un minéral activé.

9. Film, feuille ou emballage selon l'une quelconque des revendications 1 à 8, dans lequel/laquelle la taille de particule du composant poreux est comprise dans la plage allant d'environ 2 à 150 µm.

10. Film, feuille ou emballage selon l'une quelconque des revendications 1 à 9, dans lequel/laquelle le composant poreux est présent dans la plage allant d'environ 2 % à 15 % en poids dans le film, la feuille ou l'emballage.

11. Film, feuille ou emballage selon la revendication 10, dans lequel/laquelle le composant poreux est présent dans la plage allant d'environ 3 % à 9 % en poids dans le film, la feuille ou l'emballage, de préférence d'environ 6,0 %.

12. Film, feuille ou emballage selon l'une quelconque des revendications 1 à 11, dans lequel/laquelle le composant acide est un composant de conservation pour faciliter le contrôle de l'environnement entourant le produit alimentaire de sorte à réduire sa sénescence ou à aider à maintenir en grande partie sa turgescence.

13. Film, feuille ou emballage selon l'une quelconque des revendications 1 à 12, dans lequel/laquelle le composant acide est un acide carboxylique mono- ou polyinsaturé.

14. Film, feuille ou emballage selon l'une quelconque des revendications 1 à 13, dans lequel/laquelle le composant acide carboxylique est un sel de métaux alcalins ou de métaux alcalino-terreux.

15. Film, feuille ou emballage selon l'une quelconque des revendications 1 à 14, dans lequel/laquelle le composant acide carboxylique est l'acide sorbique sous forme libre ou de sel.

16. Film, feuille ou emballage selon la revendication 15, dans lequel/laquelle la forme de l'acide sorbique est le sorbate de potassium ou le sorbate de calcium.

17. Film, feuille ou emballage selon l'une quelconque des revendications 1 à 16, dans lequel/laquelle le composant acide est présent dans la plage allant d'environ 0,01 à 5,0 % en poids dans le film, la feuille ou l'emballage.

18. Film, feuille ou emballage selon l'une quelconque des revendications 1 à 17, comprenant en outre une pluralité de perforations pour faciliter la perméabilité aux gaz.

19. Film, feuille ou emballage selon la revendication 18, dans lequel/laquelle le nombre et la taille des perforations sont adaptés pour une application au type de produit alimentaire dans une plage spécifique de températures de stockage.

20. Film, feuille ou emballage selon l'une quelconque des revendications 1 à 19, dans lequel/laquelle le film est sensiblement transparent.

21. Film, feuille ou emballage selon l'une quelconque des revendications 1 à 20, dans lequel/laquelle la composition des composants est sélectionnée pour former un film flexible adapté pour avoir une aptitude au pliage appropriée pour une utilisation comme recouvrement d'un produit alimentaire.

22. Film, feuille ou emballage selon l'une quelconque des revendications 1 à 21, dans lequel/laquelle la composition du film, de la feuille ou de l'emballage comprend :
a) d'environ 91,0 % à environ 96,5 % en poids du composant plastique ;
b) d'environ 3,5 % à environ 5,5 % en poids du composant poreux ; et
c) d'environ 0,05 % à environ 2,0 % en poids du composant acide.

23. Film, feuille ou emballage selon la revendication 22, dans lequel/laquelle la composition du film, de la feuille ou de l'emballage comprend en outre d'environ 0,1 % à 1,5 % en poids d'un composant antibuée ?

24. Film, feuille ou emballage selon l'une quelconque des revendications 1 à 23, dans lequel/laquelle la composition des composants est sélectionnée pour permettre la formation d'un emballage ou d'un récipient souple pour une utilisation pour stocker un produit alimentaire.

25. Film, feuille ou emballage selon l'une quelconque des revendications 1 à 23, dans lequel/laquelle la composition des composants est sélectionnée pour permettre la formation d'un emballage ou d'un récipient semi-rigide ou rigide.
